# EUROPÄISCHE PATENTANMELDUNG

(11) **EP 3 388 725 A1**
(43) Veröffentlichungstag der Anmeldung: **17.10.2018**
(21) Anmeldenummer: 18161865.3
(22) Anmeldetag: 14.03.2018
(51) Int. Cl.: F16L 33/08

(54) **SCHLAUCHSCHELLLE**

(30) Priorität: 10.04.2017 DE 102017107727
(71) Anmelder: NORMA Germany GmbH, 63477 Maintal (DE)
(72) Erfinder: Krauß, Mathias, 61130 Nidderau (DE); Henrich, Detlef, 63694 Limeshain (DE)
(74) Vertreter: Patentanwälte Olbricht Buchhold Keulertz

(57) **Zusammenfassung**

Schlauchschelle (1) mit einem Schellenband (2) und einer Spanneinrichtung (3), wobei zwischen axialen Randbereichen (4) des Schellenbandes (2) ein Aufnahmebereich (5) ausgebildet ist, der sich radial nach außen sowie in Umfangsrichtung erstreckt, dadurch gekennzeichnet, dass der Aufnahmebereich (5) im Bereich der Spanneinrichtung (3) unterbrochen ist.

## Beschreibung

Die Erfindung betrifft eine Schlauchschelle gemäß dem Oberbegriff von Anspruch 1.

Auf dem Markt ist eine Vielzahl an Schlauchschellen mit unterschiedlichsten Verwendungsmöglichkeiten erhältlich. Ein besonders häufiges Einsatzgebiet ist dabei die Befestigung von Fluidleitungen auf Anschlussstutzen beispielsweise in Kraftfahrzeugen.

Aufgrund einer Mehrzahl von Faktoren, etwa höhere Systemdrücke, höhere Temperaturen und längere Einsatzzeiten, steigen die Anforderungen an die Verbindungen von Fluidleitung ständig an. Dabei werden insbesondere eine hohe Haltekraft und gute Dichtungseigenschaften gefordert.

Die Schlauchschellen aus dem Stand der Technik weisen üblicherweise ein glattes Schellenband auf, wobei Enden des Schellenbandes über eine Spanneinrichtung miteinander verbunden sind. Mit Hilfe der Spanneinrichtung kann ein Durchmesser der Schlauchschelle reduziert werden. Dadurch werden radiale Spannkräfte bzw. Druckkräfte beispielsweise auf ein über einen Stutzen geschobenes Schlauchende ausgeübt und dieses so am Stutzen gesichert.

Die durch die Spannkräfte auf das Schlauchende wirkenden Kräfte verlaufen allerdings häufig über den Umfang des Schlauchendes oder eines anderen zu klemmenden Gegenstands inhomogen. Dabei wird üblicherweise der größte Druck unmittelbar unterhalb der Spanneinrichtung generiert, wobei teilweise erheblich weniger Druck um den verbleibenden Schellenumfang erzeugt wird.

Eine gleichmäßige Kraftverteilung ist zur Herstellung einer guten Abdichtung über den gesamten Umfang des zu klemmenden Gegenstands, beispielsweise eines Rohrs oder einer Fluidleitung, besonders wichtig. Ansonsten kann es in bestimmten Bereichen der Schelle, in denen geringere Kräfte eingebracht werden, wie etwa auf einer der Spanneinrichtung gegenüberliegenden Seite des Schellenbands, zu Undichtigkeiten oder Leckagen kommen. Des Weiteren kann eine ungleichmäßige Klemmkraft zum Entstehen von Überlastungen an dem zu klemmenden Gegenstand beitragen, was zur Ausbildung von Sprüngen oder Rissen führen und die Lebensdauer der Verbindung erheblich reduzieren kann.

Es ist daher eine Aufgabe der Erfindung, eine Schlauchschelle bereit zu stellen, die die Nachteile des Stands der Technik beseitigt und bei kleinem Bauraumbedarf über einen langen Zeitraum eine hohe Klemmkraft bei gleichmäßiger Kraftverteilung erzeugt.

Gelöst wird diese Aufgabe durch eine Schlauchschelle mit den Merkmalen des Anspruchs 1. Vorteilhafte Ausgestaltungen finden sich in den Unteransprüchen.

Bei einer Schlauchschelle mit einem Schellenband und einer Spanneinrichtung ist erfindungsgemäß vorgesehen, dass zwischen axialen Randbereichen des Schellenbandes ein Aufnahmebereich ausgebildet ist, der sich radial nach außen sowie in Umfangsrichtung erstreckt, wobei der Aufnahmebereich im Bereich der Spanneinrichtung unterbrochen ist.

Durch den Aufnahmebereich, der sich auf einer Innenseite des Schellenbandes konkav zwischen den axialen Randbereichen erstreckt, wird eine Kontaktfläche zwischen dem Schellenband und einer Umfangsfläche eines Schlauchendes oder ähnlichem auf die Randbereiche bzw. den Bereich unterhalb der Spanneinrichtung reduziert. Dadurch wird in den Randbereichen ein höherer Druck auf das Schlauchende ausgeübt, während gleichzeitig Material des Schlauchendes in den Aufnahmebereich ausweichen kann. Damit wird sozusagen eine federelastische Vorspannung in das Material eingebracht, die Schwankungen der Spannkraft, beispielsweise durch Alterung oder Temperaturunterschiede, ausgleichen kann. Dadurch kann auf zusätzliche elastische Komponenten, wie beispielsweise an der Schelle befestigte Federelemente, verzichtet werden. Ferner wird eine gleichmäßige Verteilung der durch die Schlauchschellen ausgeübten Kräfte erreicht, indem im Bereich der Spanneinrichtung eine größere Kontaktfläche vorgesehen ist und somit die Kräfte auf eine größere Fläche übertragen werden. Somit können insgesamt auch erhöhte Spannkräfte eingebracht werden, weil auch dann der Druck im Bereich der Spanneinrichtung zumindest nicht wesentlich höher ist als in den anderen Bereichen der Schelle.

Vorzugsweise weist das Schellenband im Bereich der Spanneinrichtung eine glatte Innenseite auf. Mit anderen Worten ist unterhalb der Spanneinrichtung kein Aufnahmebereich im Schellenband ausgebildet. Dies ermöglicht eine besonders gleichmäßige Einbringung der Klemmkraft in diesem Bereich und verhindert, dass Druckspitzen entstehen.

Bei einer vorteilhaften Gestaltung ist der Aufnahmebereich durch einen Querschnitt des Schellenbandes gebildet, der teilweise elliptisch, teilkreisförmig oder trapezförmig ausgebildet ist. Damit wird eine konkave bzw. radial nach außen gewölbte Form erreicht. Durch Spannen der Schlauchschelle verdrängtes Material kann dann einfach im Aufnahmebereich aufgenommen werden.

Insbesondere kann ein Querschnitt so gewählt werden, dass eine Tiefe des Aufnahmebereichs in seiner Mitte am größten ist. Dabei ist die Mitte als Mittelpunkt des Aufnahmebereichs in axialer Richtung der Schlauchschelle definiert. Dadurch ergibt sich eine weitgehend symmetrische Kraftwirkung zwischen den Randbereichen.

Vorzugsweise umfasst die Spanneinrichtung eine Spannschraube. Die Schelle ist dabei insbesondere als Schneckengewindeschelle ausgebildet, bei der die Spannschraube mit einem an der Außenseite des Schellenbandes Gewinde zusammenwirkt. Mit einer derartigen Schelle lassen sich relativ einfach hohe Spannkräfte erzeugen. Alternativ könnten auch an Enden des Schellenbandes Spannköpfe ausgebildet sein, die über die Spannschraube gegeneinander verspannt werden können.

Bei einer alternativen Ausgestaltung kann die Spanneinrichtung anstelle einer Spannschraube einen Schnellverschluss oder ähnliches aufweisen.

In einer bevorzugten Ausgestaltung ist eine Längsachse der Spannschraube axial außermittig angeordnet. Aufgrund einer Gewindesteigung der Spannschraube erfolgt beim Spannen einer Schelle mit Schneckengewinde eine außermittige Belastung des Spannbandes. Zusätzlich wird ein Moment auf das Spannband übertragen. Durch die außermittige Anordnung der Spannschraube wird diesem Effekt entgegengewirkt, so dass die maximale Spannkraft wieder in einer Mitte des Schellenbands eingebracht wird und nicht in Richtung eines der Randbereiche versetzt. Dies führt zu einer gleichmäßigeren Verteilung der Spannkraft in Axialrichtung der Schlauchschelle und damit zu einer höheren Betriebssicherheit.

Bevorzugterweise weist der Aufnahmebereich einen ersten Endbereich und einen zweiten Endbereich auf, wobei die Spanneinrichtung zwischen dem ersten Endbereich und dem zweiten Endbereich angeordnet ist. Dabei kann der Aufnahmebereich auf einfache Weise unterbrochen werden und in den Aufnahmebereich unterhalb der Spanneinrichtung allmählich übergehen. Das Auftreten von Spannungsspitzen innerhalb des Schellenbands wird so vermieden.

Dabei ist besonders bevorzugt, dass sich der erste Endbereich zu einem ersten Ende und der zweite Endbereich zu einem zweiten Ende verjüngen, wobei das erste Ende und das zweite Ende axial insbesondere außermittig angeordnet sind. Durch die Verjüngung wird ein allmählicher Übergang in den flachen Bereich unterhalb der Spanneinrichtung erreicht. Somit kann eine gleichmäßigere Druckverteilung um den Schellenumfang gesichert werden.

Bei einer axial außermittigen Verjüngung der Enden ist es möglich, die vom Schellenband auf ein Schlauchende oder ähnliches ausgeübte Druckkraft auch in Axialrichtung der Schlauchschelle zu beeinflussen. Prinzipiell wird dabei ein höherer Druck in dem Randbereich ausgeübt, zu dem das Ende einen geringeren Abstand hat.

In einer bevorzugten Ausgestaltung sind das erste und zweite Ende auf der gleichen Seite einer in Umfangsrichtung umlaufenden Mittellinie des Schellenbandes angeordnet. Damit wird über den näher an den Enden liegenden Randbereich ein höherer Druck auf das Schlauchende ausgeübt als über den anderen Randbereich. Somit kann ein Druck einseitig maximiert werden.

Durch diese Ausgestaltung kann beispielsweise die unsymmetrische Krafteinbringung der Spannschraube ausgeglichen oder verstärkt werden, je nachdem, auf welcher der Seite der Spannschraube die Enden der Endbereiche auslaufen.

Bei einer alternativen Ausgestaltung sind das erste Ende und das zweite Ende an gegenüberliegenden Seiten der umlaufenden Mittellinie des Schellenbandes angeordnet. Dabei wird ein Kompromiss zwischen maximaler Festigkeit und guter Druckverteilung erzielt.

Das erste und das zweite Ende können insbesondere teilweise rund bzw. kreisförmig oder spitz zulaufend ausgebildet sein.

Bevorzugterweise ist der Aufnahmebereich in Umfangsrichtung zwischen den Endbereichen gleichförmig ausgebildet. Ein solcher ebener Aufnahmebereich lässt sich einfach herstellen und führt zu einer gleichmäßigen Ausübung der Spannkraft.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen in schematischer Ansicht:
Fig. 1 eine Schlauchschelle in räumlicher Darstellung,
Fig. 2 einen Querschnitt der auf einem Schlauchende montierten Schlauchschelle,
Fig. 3a eine Seitenansicht einer ersten Ausführungsform der Schlauchschelle,
Fig. 3b eine Draufsicht der Schlauchschelle nach Fig. 3a,
Fig. 4a eine Seitenansicht einer zweiten Ausführungsform der Schlauchschelle
Fig. 4b eine Draufsicht der Schlauchschelle nach Fig. 4a,
Fig. 5a eine Seitenansicht einer weiteren Ausführungsform der Schlauchschelle und
Fig. 5b eine Draufsicht der Schlauchschelle nach Fig. 5a.

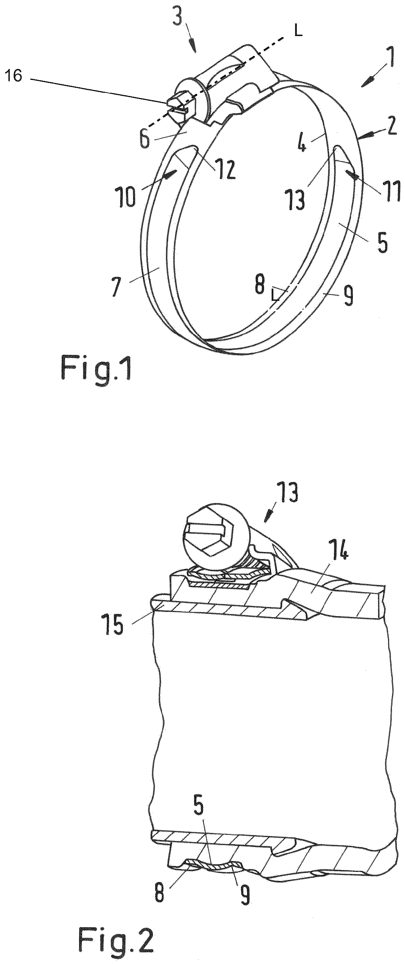

Die in Fig. 1 dargestellte Schlauchschelle 1 ist als Schneckengewindeschelle ausgebildet und weist ein Schellenband 2 und eine Spanneinrichtung 3 auf. An einer Innenseite 4 des Schellenbands 2 ist ein sich in Umfangsrichtung erstreckender, konkaver Aufnahmebereich 5 ausgebildet, der sich an einer Außenseite 6 des Schellenbands 2 in einer entsprechenden konvexen Wölbung 7 wiederspiegelt. Unterhalb der Spanneinrichtung 3 ist der Aufnahmebereich 5 unterbrochen und die Innenseite 4 des Schellenbands 2 ist dort glatt ausgebildet.

Am Rand des Schellenbandes 2 sind axiale Randbereiche 8, 9 ausgebildet, die den Aufnahmebereich 5 axial begrenzen und im Wesentlichen zur Kraftübertragung auf ein Schlauchende oder ähnlichem dienen.

Der Aufnahmebereich weist einen ersten Endbereich 10 und einen zweiten Endbereich 11 auf, zwischen denen die Spanneinrichtung 3 angeordnet ist. Der erste Endbereich 10 verjüngt sich zu einem ersten Ende 12 und der zweite Endbereich 11 zu einem zweiten Ende 13. Dabei liegen die Enden nicht auf einer axialen Mittellinie des Schellenbands 2, sondern axial versetzt in Richtung zu einem der Randbereiche 8, 9. Bei diesem Ausführungsbeispiel liegen die Enden 12, 13 auf unterschiedlichen Seiten der Mittellinie, nämlich das Ende 12 näher am Randbereich 9 und das Ende 13 näher am Randbereich 8.

In Fig. 2 ist eine Schnittdarstellung durch eine auf einem Schlauchende 14 montierte Schlauchschelle 1 dargestellt, wobei das Schlauchende 14 auf einen Anschlussstutzen 15 aufgeschoben ist. Die Schlauchschelle ist dabei bereits gespannt, übt also radial nach innen gerichtete Kräfte auf das Schlauchende 14 auf, so dass dieses dicht und sicher am Anschlussstutzen 15 gehalten ist.

Das Schellenband 2 der Schelle 1 liegt im Wesentlichen mit den Randbereichen 8, 9 am Außenumfang des Schlauchendes 14 an. Beim Spannen der Schlauchschelle 1 wird also in den Randbereichen 8, 9 ein relativ hoher Druck auf das Schlauchende 1 ausgeübt, wobei ein elastisches Material des Schlauchendes 14 dadurch in den Aufnahmebereich 5 gedrückt wird. Dadurch ergibt sich eine Federwirkung, die beispielsweise durch Temperaturschwankungen auftretende Änderungen der Spannkraft ausgleichen kann. Somit werden eine dauerhafte Dichtigkeit und ein sicherer Halt des Schlauchendes 14 an einem Stutzen 15 erreicht.

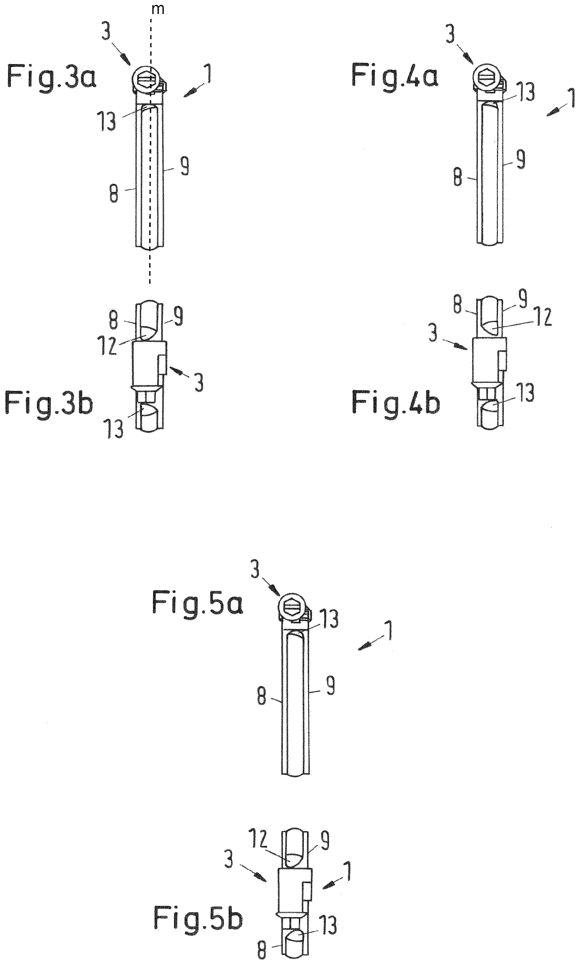

Fig. 3a und 3b zeigt eine Ausführungsform der Schlauchschelle 1, wobei die Spanneinrichtung 3 eine Spannschraube 16 aufweist. Eine Längsachse L der Spannschraube 16 ist dabei axial außermittig angeordnet ist. Bei dieser Schlauchschelle handelt es sich also um eine Schneckengewindeschelle mit außermittiger Spannschraube.

Der erste Endbereich 10 verjüngt sich dabei zu einem ersten Ende 12 und der zweite Endbereich 11 zu einem zweiten Ende 13, wobei das erste Ende 12 und das zweite Ende 13 axial außermittig und auf der gleichen Seite einer in Umfangsrichtung umlaufenden Mittelachse m des Schellenbandes 2 angeordnet sind. Dabei befinden sich die Enden 12, 13 und die Längsachse L der Spannschraube 16 auf einer gleichen Seite von der Mittellinie, sind als beide näher am gleichen Randbereich 8 als am anderen Randbereich 9. Dadurch ist unterhalb des Randbereichs 8 ein besonders hoher Druck in das Schlauchende einbringbar. Damit ergibt sich eine hohe Dichtigkeit.

Fig. 4a und 4b zeigen eine alternative Ausgestaltung der Schlauchschelle 1, wobei das erste Ende 12 und das zweite Ende 13 näher an den einem Randbereich 9 und die Längsachse L der Spannschraube 16 näher am anderen Randbereich 8 liegen. Die Enden 12, 13 liegen also auf einer anderen Seite der Mittellinie m als die Längsachse L der Spannschraube 16. Bei dieser Ausgestaltung ergibt sich in beiden Seiten ein ähnliches Druckniveau. Damit ergibt sich eine hohe Haltekraft.

Bei der in Fig. 5a und 5b dargestellten Ausgestaltung befindet sich das erste Ende 12 näher am Randbereich 8 und das Ende 13 näher am Randbereich 9. Die Enden 12, 13 liegen also auf unterschiedlichen Seiten der Mittellinie m. Diese Ausgestaltung stellt einen guten Kompromiss zwischen Haltekräften und Dichtigkeit dar.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Schlauchschelle
- 2: Schellenband
- 3: Spanneinrichtung
- 4: Innenseite
- 5: Aufnahmebereich
- 6: Außenseite
- 7: Wölbung
- 8: Randbereich
- 9: Randbereich
- 10: erster Endbereich
- 11: zweiter Endbereich
- 12: erstes Ende
- 13: zweites Ende
- 14: Schlauchende
- 15: Anschlussstutzen
- 16: Spannschraube

- L: Längsachse der Spannschraube
- m: Mittelachse des Schellenbands

## Patentansprüche

1. Schlauchschelle (1) mit einem Schellenband (2) und einer Spanneinrichtung (3), wobei zwischen axialen Randbereichen (8, 9) des Schellenbandes (2) ein Aufnahmebereich (5) ausgebildet ist, der sich radial nach außen sowie in Umfangsrichtung erstreckt, **dadurch gekennzeichnet, dass** der Aufnahmebereich (5) im Bereich der Spanneinrichtung (3) unterbrochen ist.

2. Schlauchschelle (1) nach einem der vorherigen Ansprüche, **dadurch gekennzeichnet, dass** der Aufnahmebereich (5) durch einen Querschnitt des Schellenbandes (2) gebildet ist, der teilweise elliptisch, kreisförmig oder trapezförmig ausgebildet ist.

3. Schlauchschelle (1) nach einem der vorherigen Ansprüche, **dadurch gekennzeichnet, dass** der Aufnahmebereich (5) einen ersten Endbereich (10) und einen zweiten Endbereich (11) aufweist, wobei die Spanneinrichtung (3) zwischen dem ersten Endbereich (10) und dem zweiten Endbereich (11) angeordnet ist.

4. Schlauchschelle (1) nach einem der vorherigen Ansprüche, **dadurch gekennzeichnet, dass** die Spanneinrichtung (3) eine Spannschraube (16) aufweist, wobei eine Längsachse (L) der Spannschraube (16) axial außermittig angeordnet ist.

5. Schlauchschelle (1) nach Anspruch 3 oder 4, **dadurch gekennzeichnet, dass** sich der erste Endbereich (10) sich zu einem ersten Ende (12) und der zweite Endbereich (11) zu einem zweiten Ende (13) verjüngen, wobei das erste Ende (12) und das zweite Ende (13) axial insbesondere außermittig angeordnet sind.

6. Schlauchschelle (1) nach Anspruch 5, **dadurch gekennzeichnet, dass** das erste Ende (12) und das zweite Ende (13) auf der gleichen Seite einer in Umfangsrichtung umlaufenden Mittelachse (m) des Schellenbandes (2) angeordnet sind.

7. Schlauchschelle (1) nach Anspruch 6, **dadurch gekennzeichnet, dass** das erste Ende (12) und das zweite Ende (13) an gegenüberliegenden Seiten der umlaufenden Mittelachse (m) des Schellenbandes (2) angeordnet sind.

8. Schlauchschelle (1) nach einem der Ansprüche 3 bis 7, wobei der Aufnahmebereich (5) in Umfangsrichtung zwischen den Endbereichen (10, 11) gleichförmig ausgebildet ist.
